# FASCICULE DE BREVET EUROPEEN

(11) **EP 0 588 422 B1**
(45) Date de publication et mention de la délivrance du brevet: **02.12.1998**
(21) Numéro de dépôt: 93202625.5
(22) Date de dépôt: 09.09.1993
(51) Int. Cl.: G06T 7/40, G06T 11/00

(54) **Analyseur et synthétiseur de textures**
Analysierer und Synthetisierer von Texturen
Analyzer and synthesizer of textures

(30) Priorité: 16.09.1992 FR 9211044
(43) Date de publication de la demande: 23.03.1994
(73) Titulaire: LABORATOIRES D'ELECTRONIQUE PHILIPS S.A.S., 94450 Limeil-Brévannes (FR); Koninklijke Philips Electronics N.V., 5621 BA Eindhoven (NL)
(72) Inventeur: Zwierski, Didier, Société Civile S.P.I.D., F-75008 Paris (FR); Nadal, Jean-Pierre, Société Civile S.P.I.D., F-75008 Paris (FR); Sirat, Jacques-Ariel, Société Civile S.P.I.D., F-75008 Paris (FR)
(74) Mandataire: Landousy, Christian

(56) Documents cités:
- EP-A- 0 396 171
- EP-A- 0 454 535
- 1991 IEEE INT. SYMP. OM CIRCUITS AND SYSTEMS 11 Juin 1991, SINGAPORE pages 2656 - 60 PATEL D. ET AL. 'a single layer neural network for texture discrimination'
- INT. J. PATTERN RECOGNIT. ARTIF. INTELLIGENCE vol. 6, no. 1, Avril 1992, pages 131 - 41 ATALAY V. ET AL. 'the random neural network model for texture generation'

## Description

L'invention concerne un système pour une synthèse d'images texturées comprenant :
- un synthétiseur de texture muni d'un réseau de neurones de synthèse comprenant des neurones connectés entre eux par des forces de liaisons définies par des coefficients synaptiques C_{ab},
- des moyens d'entrée pour charger, dans le réseau de neurones de synthèse, des valeurs de coefficients synaptiques C_{ab} caractérisant au moins une fonction de voisinage de pixels d'une texture d'une image d'entrée,
- des moyens pour faire opérer le réseau de neurones de synthèse de manière autonome, pour générer une réplique statistique de ladite texture par un mécanisme de relaxation faisant que des données de sortie du réseau de neurones de synthèse soient cycliquement réintroduites en entrée dudit réseau de neurones.

Elle concerne également un analyseur de textures et un synthétiseur de textures.

Dans une image on appelle texture une région qui présente un aspect homogène pour un observateur. Une texture peut représenter un même matériau : bois, tissu, pavement, eau ... qui comporte un nombre limité de motifs qui sont répétés suivant une disposition plus ou moins régulière ou aléatoire. Restituer une texture consiste alors à fournir à l'oeil une image qui possède le mieux possible l'aspect de l'image du départ, c'est-à-dire qu'il s'agit de restituer une réplique statistique de la disposition des motifs de la texture.

Pour caractériser une texture il faut au préalable déterminer son étendue. Cette opération se rapporte à la segmentation de la texture. Elle a pour objet de déterminer les contours limitant l'étendue de la ou des textures. Ce traitement peut être effectué à l'extérieur du système.

Après avoir déterminé les contours de la texture, il faut ensuite pouvoir la reproduire pour générer des images utilisées par exemple en télévision, avec un compact disc video, ou avec un visiophone.

Pour coder une texture, une méthode consiste à déterminer le niveau de luminance d'un pixel à partir des niveaux de luminance de pixels voisins. Pour synthétiser la texture on effectue un processus itératif qui successivement met à jour des luminances de pixels en optimisant une fonction de coût. La texture ainsi synthétisée dépend des paramètres codés de la fonction de coût. D'où la nécessité de réduire au maximum le nombre de ces paramètres afin de réduire les temps de calcul et de réduire le temps de transmission des données pour synthétiser une texture. Une compression importante de l'information est donc souhaitable.

On connaît le document : "Texture Generation with the random neural network model" de V. ATALAY, E. GELENBE et N. YALABIK, paru dans Proc. ICANN, 1991, pages 111-116, qui décrit un dispositif de génération de textures. Ce dispositif met en oeuvre un réseau de neurones opérant en synthétiseur de textures. Pour cela le réseau de neurones est chargé avec des coefficients synaptiques qui sont fixés a priori par une sélection effectuée par l'utilisateur à partir de considération de symétrie de la texture. Le réseau de neurones détermine des états de tous les pixels formant la réplique statistique en prenant, un à un, chacun des pixels et en prenant en compte les états des pixels entourant le pixel en cours de traitement. Le calcul met en oeuvre un mécanisme de relaxation qui consiste à réintroduire les données de sortie du réseau de neurones sur ses bornes d'entrée. Après un certain nombre de cycles, le mécanisme de relaxation se stabilise par lui-même. Le fonctionnement est contrôlé par un calculateur.

Un tel dispositif présente plusieurs inconvénients. L'analyse de la texture (ou codage de la texture) est opérée à partir d'une sélection effectuée par l'utilisateur et non pas par le dispositif lui-même. Un tel dispositif ne peut donc pas opérer de manière autonome l'analyse et la synthèse de la texture sans l'intervention de l'utilisateur. Il ne peut donc pas opérer dynamiquement et suivre l'évolution du contenu des textures.

De plus, dans l'article, l'utilisateur met en oeuvre une fonction de voisinage simple, c'est-à-dire une somme pondérée des pixels environnants. Il n'est pas envisageable de prendre en compte des fonctions complexes qui tiennent compte des interactions lointaines, diffuses, réparties ... entre des pixels d'une image. Une telle méthode de sélection devient en effet vite insurmontable.

Un premier but de l'invention est de proposer des moyens pour coder une texture de complexité quelconque, puis pour transmettre, éventuellement à distance, des informations codées compressées afin de restituer une réplique de ladite texture.

Ce but est atteint avec un système pour la synthèse d'images texturées qui comprend :
- un analyseur de texture muni d'un réseau de neurones d'analyse qui, à partir d'exemples présentés en entrée se rapportant à ladite texture, apprend à caractériser ladite texture en calculant des valeurs desdits coefficients synaptiques C_{ab} en mettant en oeuvre au moins une fonction de voisinage caractérisant un voisinage autour des pixels formant ladite texture,
- des moyens pour transmettre lesdits coefficients synaptiques C_{ab} au réseau de neurones de synthèse,
- le réseau de neurones de synthèse mettant en oeuvre une fonction de voisinage identique à celle apprise ou des fonctions de voisinage identiques à celles apprises par le réseau de neurones d'analyse, le réseau de neurones de synthèse générant ladite réplique statistique de la texture de l'image d'entrée à partir de valeurs aléatoires données initialement aux pixels de ladite réplique.

Un tel système est ainsi capable d'apprendre par lui-même, par apprentissage, des textures réelles, même désordonnées ou bruitées. Il n'est pas nécessaire que le système connaisse a priori la texture. La fonction de voisinage qui caractérise la texture autour de chaque pixel peut avoir une complexité arbitraire quelconque.

Après que la texture a été apprise, donc codée par le réseau de neurones de l'analyseur, celui-ci transmet des paramètres de cette texture apprise sous forme de coefficients synaptiques vers un synthétiseur qui synthétise la texture. En transmettant la texture sous forme de coefficients synaptiques on réalise ainsi une compression efficace de l'information.

Avantageusement, le synthétiseur de texture qui reçoit les coefficients synaptiques peut être local ou distant de l'analyseur. Dans ce dernier cas la transmission peut être réalisée par réseau câblé ou par ondes hertziennes.

Pour générer ladite réplique statistique de la texture apprise, le synthétiseur peut ne recevoir de l'analyseur que les coefficients synaptiques. Aucun autre paramètre en provenance de l'analyseur ne lui est nécessaire. Pour cela, le réseau de neurones de synthèse met en oeuvre la (les) même(s) fonction(s) de voisinage que celle(s) mise(s) en oeuvre par l'analyseur. Le réseau de neurones opère par un mécanisme de relaxation, c'est-à-dire que les sorties du réseau de neurones sont cycliquement réintroduites à l'entrée du même réseau.

Pour opérer, le réseau de neurones de synthèse doit disposer d'états initiaux de pixels. Les valeurs initiales données aux pixels peuvent être sélectionnées aléatoirement. Il est également possible de choisir un ou plusieurs pixels initialisateurs ayant des positions réparties sur toute l'étendue de la texture auxquels on impose des valeurs initiales déterminées. Les valeurs des états et les positions des pixels initialisateurs peuvent être transmises par l'analyseur.

Préférentiellement, on utilise un réseau de neurones d'analyse et un réseau de neurones de synthèse ayant une structure hiérarchisée en arbres de neurones. La profondeur de l'arbre, donc le nombre de couches successives de neurones, peut être prédéterminée. On réduit ainsi le nombre de neurones de l'arbre et on réduit la durée des calculs effectués par le réseau de neurones de synthèse. Avantageusement, un seul réseau de neurones en arbre peut mettre en oeuvre plusieurs fonctions de voisinage.

Il est également possible que les réseaux de neurones d'analyse et de synthèse aient une structure connue par exemple une structure organisée en couches de neurones.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
- figures 1A, 1B : une représentation d'une image source dans laquelle apparaissent deux textures et une représentation d'une image synthétisée avec une réplique statistique des textures apprises,
- figure 2 : un schéma-bloc d'un système de traitement d'images texturées selon l'invention,
- figure 3 : un schéma-bloc d'un analyseur de texture,
- figure 4 : un schéma-bloc d'un synthétiseur de texture,
- figure 5 : une représentation d'une texture où figurent des zones avec des fonctions de voisinage différentes,
- figure 6 : une représentation d'une architecture de réseau de neurones en arbre.

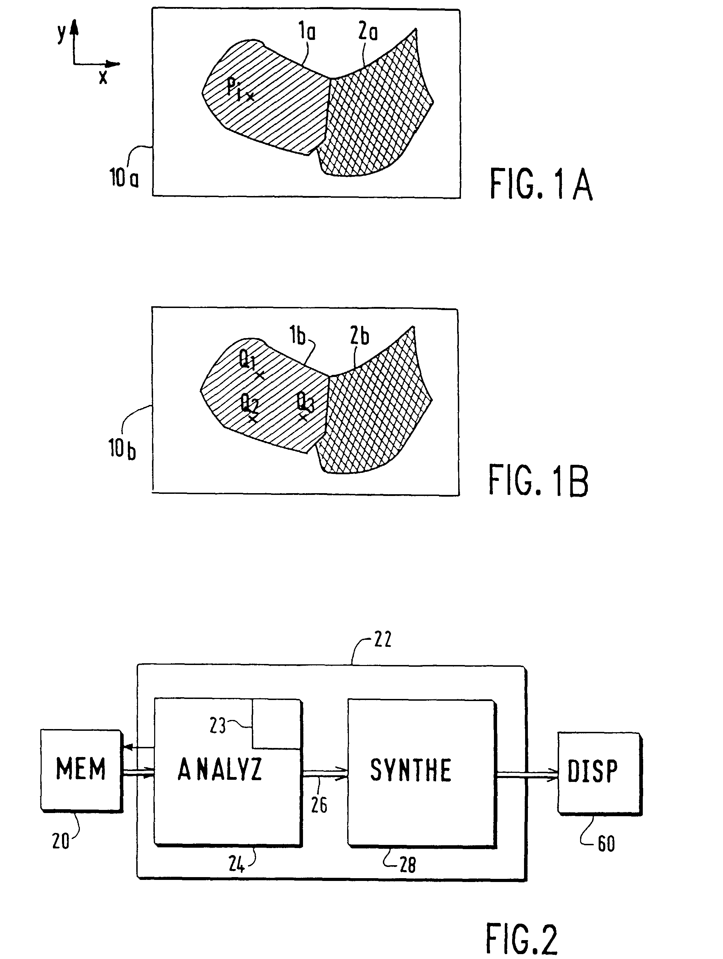

La figure 1A représente une image 10a sur laquelle apparaissent deux zones 1a et 2a formées de parties d'image ayant des textures différentes. La zone la représente une texture formée de lignes droites inclinées. En règle générale une texture ne correspond pas à un motif géométrique parfaitement défini et parfaitement répétitif. D'un point de vue mathématique, elle ne peut donc être décrite que de manière statistique. Selon l'invention on opère une modélisation de la texture de sorte que ce modèle, lorsqu'il est mis en oeuvre par le synthétiseur, permet de générer une réplique statistique de la texture qui soit suffisamment fidèle pour que l'observateur ait la même impression visuelle lorsqu'il observe soit la texture source, soit sa réplique statistique. Il ne s'agit donc pas de recopier la texture à l'identique mais d'en assurer une reproduction satisfaisante.

La figure 2 représente un schéma-bloc d'un système 22 de traitement d'images texturées selon l'invention. Les données de l'image à traiter sont contenues dans une mémoire d'image 20 MEM. Elles peuvent aussi être issues d'un canal de transmission qui délivre les données en continu. Le système 22 comprend un analyseur 24 ANALYZ et un synthétiseur 28 SYNTHE. Préalablement il faut déterminer les contours des zones ayant une texture homogène, donc connaître les adresses des pixels appartenant à une même zone. Un détecteur de contour 23 peut être incorporé à l'analyseur. Une zone est ensuite apprise, donc codée, par l'analyseur 24 qui transmet au synthétiseur 28, par un canal 26, des données codées fortement compressées. A partir de ces données le synthétiseur génère une réplique statistique de la texture codée.

Un avantage de ce système consiste en ce que le canal 26 transmet des données codées pour lesquelles l'information transmise a été fortement compressée. Par ailleurs, un autre avantage réside dans le fait qu'à l'issue de la transmission des données codées, le synthétiseur n'a pas besoin de recevoir l'état des pixels de la texture source pour fournir une réplique statistique de la texture.

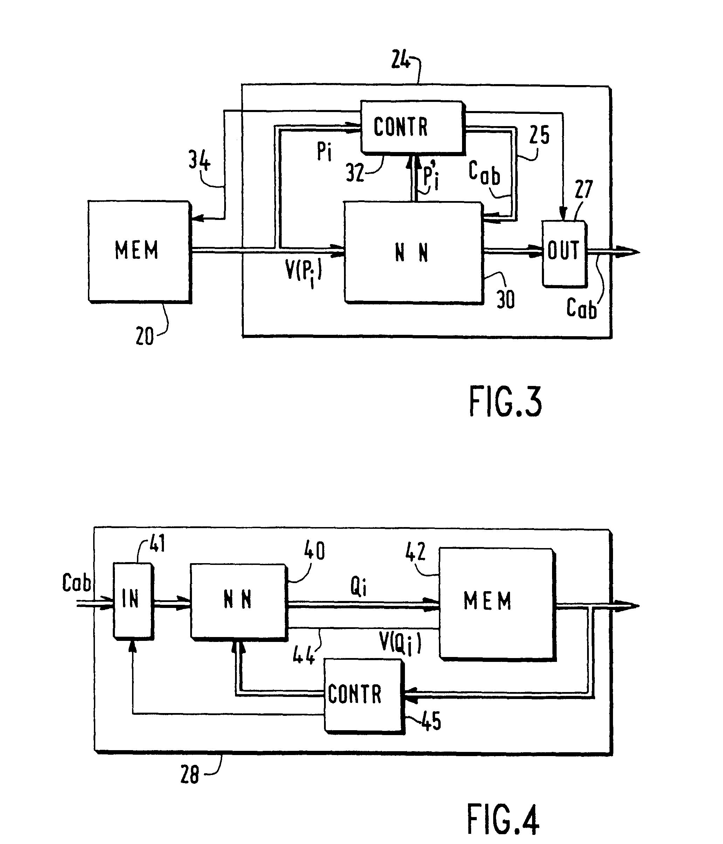

Une première étape consiste donc à analyser la texture à reproduire. Ceci passe par un processus de codage de la texture qui est mis en oeuvre dans l'analyseur. Selon l'invention l'analyseur 24 comprend (figure 3) un réseau de neurones d'analyse 30 NN qui apprend la texture en déterminant des coefficients synaptiques qui constituent alors les données codées fortement compressées.

Les mécanismes d'apprentissage mis en oeuvre dans un réseau de neurones sont connus de l'homme du métier et ne seront pas détaillés ici. Pour la compréhension de l'invention il suffit de savoir que l'apprentissage d'un réseau de neurones consiste à présenter à l'entrée du réseau de neurones des exemples pour lesquels le réseau de neurones doit fournir en sortie un résultat connu à l'avance (apprentissage supervisé). Ce résultat connu à l'avance et le résultat effectivement fourni par le réseau de neurones sont comparés entre eux. Les écarts sont progressivement réduits en présentant un nombre suffisant d'exemples. Ceci est obtenu en mettant à jour les coefficients synaptiques Cab mis en oeuvre dans le réseau de neurones. Après la présentation de ces exemples le réseau de neurones a appris à associer les résultats connus aux exemples d'entrée, c'est-à-dire qu'il est capable de restituer un pixel en fonction des pixels de son voisinage. Il a donc codé la texture.

Cette connaissance est alors contenue globalement dans le jeu de coefficients synaptiques Cab qui caractérise le poids de chaque liaison entre un neurone a et un neurone b (ou une entrée). Pour que le réseau de neurones apprenne la texture, il opère à partir de pixels pris dans la texture. Pour un pixel quelconque Pᵢ (figure 1A) de coordonnées xᵢ, yᵢ dans la texture source, on fournit à l'entrée du réseau de neurones les valeurs de paramètres (par exemple de luminance) de pixels environnant le pixel Pᵢ. Ces pixels sont reliés au pixel Pᵢ par une fonction de voisinage. Il est possible de mettre en oeuvre diverses fonctions de voisinage permettant de caractériser tout pixel Pᵢ. Elles peuvent caractériser l'environnement immédiat du pixel Pᵢ, par exemple les plus proches voisins. Elles peuvent aussi caractériser un environnement éloigné ou plus généralement toute relation diffuse qu'il y a entre l'état d'un pixel et les états d'autres pixels de la texture. Avantageusement l'utilisation d'un réseau de neurones permet de n'apporter aucune contrainte au choix des fonctions de voisinage. Il est ainsi possible de coder n'importe quelle texture, même très complexe.

Les coefficients synaptiques constituent alors des données fortement compressées qui renferment globalement toute l'information de la texture. Ces coefficients synaptiques peuvent alors être transmis par une liaison câblée ou par une liaison aérienne à un synthétiseur qui peut être proche ou distant de l'analyseur. L'invention est particulièrement intéressante lorsque la liaison entre l'analyseur et le synthétiseur tire avantage du taux élevé de compression de données.

La figure 3 représente un schéma de l'analyseur 24 relié à la mémoire d'image 20. Fondamentalement l'analyseur 24 comprend un réseau de neurones d'analyse 30 NN et un calculateur 32 CONTR. Celui-ci peut mettre en oeuvre la détermination du contour des textures à coder. Mais cette opération peut être effectuée à l'extérieur de l'analyseur. L'étendue de la texture à coder étant déterminée, le calculateur 32 adresse (signal 34) dans la mémoire 20, pour chaque pixel Pᵢ de la texture, les pixels environnants correspondant à une fonction de voisinage V(Pᵢ) prédéterminée.

Les valeurs des pixels environnants V(Pᵢ) entrent dans le réseau de neurones qui calcule un état P'ᵢ tel que :
P'ᵢ = f (V (Pᵢ), {Cab}) où f représente une somme des états des pixels environnants pondérée par les coefficients synaptiques. L'état P'ᵢ est comparé à l'état Pᵢ dans le calculateur 32 qui met en oeuvre un algorithme d'apprentissage connu, par exemple l'algorithme de rétropropagation des erreurs. Le calculateur fournit alors des coefficients synaptiques mis à jour C_{ab} (connexion 25) qui se substituent dans le réseau de neurones 30 aux anciens coefficients synaptiques. Le mécanisme se poursuit jusqu'à ce que la texture soit suffisamment apprise, ce qui peut se traduire par un taux d'erreurs faible. A la fin du mécanisme d'apprentissage, la texture se trouve ainsi codée sous la forme de coefficients synaptiques stockés dans le réseau de neurones d'analyse. Ils forment un codage fortement compressé de la texture. Ces coefficients synaptiques peuvent alors être transmis au synthétiseur par des moyens de transmission 27 OUT pilotés par le calculateur 32.

La figure 4 représente un schéma du synthétiseur 28. Il comprend un réseau de neurones de synthèse 40 NN dans lequel sont chargés les coefficients synaptiques C_{ab}, calculés par l'analyseur, à travers des moyens d'entrée 41 IN. Le réseau de neurones de synthèse 40 met en oeuvre la même fonction de voisinage V(.) que celle mise en oeuvre par le réseau de neurones d'analyse 30 lors des étapes d'apprentissage préalables. Le réseau de neurones 40 détermine une réplique statistique de la texture en calculant chaque pixel Qᵢ à partir de la fonction de voisinage V(Qᵢ) et de valeurs desdits pixels environnants (figure 1B).

La méthode consiste à laisser évoluer seul le réseau de neurones sous l'action des interactions (Qᵢ, V(Qᵢ)). Pour cela un pixel Qᵢ(t) est choisi à un instant t et son état Qᵢ(t+1) à l'instant t+1 est calculé. Ceci peut se faire :
- soit de manière synchrone : on calcule les états de tous les pixels (Q(t+1) en fonction des voisinages V(Q(t)) ce qui implique la mémorisation de deux ensembles complets d'états,
- soit de manière asynchrone : on remet à jour successivement chaque état Q(t) ce qui fournit un ensemble complet {Q(t+1)} remis à jour lorsque tous les pixels ont subi le traitement.

Pour initialiser le calcul on peut donner des valeurs choisies aléatoirement à tous les pixels formant initialement la réplique statistique. En complément, on peut également initialiser le calcul en donnant à quelques pixels formant la texture des valeurs qui sont transmises par l'analyseur. Ce dernier cas permet au synthétiseur d'atteindre plus rapidement un état stable. Chaque pixel Qᵢ est ainsi calculé, puis stocké dans une mémoire d'image 42 qui, à son tour, fournit un voisinage pour un nouveau pixel Qᵢ sur requête (signal 44) du réseau de neurones 40. Ainsi par un mécanisme convergent dit de relaxation le réseau de neurones calcule tous les états des pixels formant la texture et converge vers une réplique statistique stable de la texture. Pour atteindre cette réplique statistique des pixels peuvent être recalculés plusieurs fois. Le synthétiseur 28 comprend un calculateur 45 qui gère le fonctionnement du réseau de neurones 40, de la mémoire 42 et des moyens d'entrée 41.

A la fin du processus, les valeurs des pixels contenues dans la mémoire d'images 42 peuvent être lues pour être envoyées à un dispositif DISP 60 de visualisation ou de traitement approprié (figure 2).

Les réseaux de neurones d'analyse 30 et de synthèse 40 peuvent avoir une architecture connue par exemple une architecture multicouches ou une architecture en arbre. Cette dernière est par exemple celle décrite dans la demande de brevet européen EP 0 446 084. Elle présente un intérêt spécifique car il est possible d'utiliser, pour un pixel donné, plusieurs fonctions de voisinage V₁(P), V₂(P), ... localisées à des endroits différents de la texture.

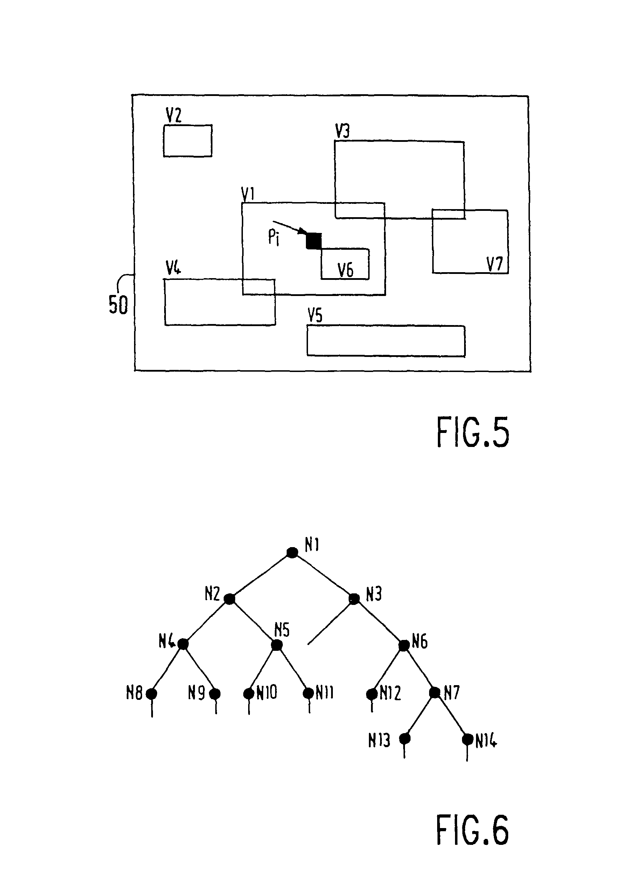

Sur la figure 5 est représentée une zone 50 d'une texture. Le calcul de l'état du pixel Pᵢ se fait de la manière suivante avec le réseau de neurones en arbre représenté sur la figure 6. On définit un neurone N1 qui reçoit en entrée les états des pixels du voisinage V₁. Suivant la valeur de la sortie du neurone N1 (par exemple son signe), on active soit le neurone N2, ayant en entrée les états des pixels du voisinage V₂, soit le neurone N3 ayant en entrée les états des pixels du voisinage V₃. Le même mécanisme se poursuit avec des neurones suivants tout au long de chaque branche de l'arbre de décision. Ce mécanisme est décrit dans la demande de brevet européen EP 0 446 084. Chaque branche aboutit à des neurones terminaux N8 à N14 dont l'un donne la valeur du pixel Pᵢ. Le fonctionnement d'un tel réseau de neurones en arbre se rapproche du mode de fonctionnement d'un observateur humain qui analyse une scène ou une texture par des observations successives effectuées en différents endroits.

## Revendications

1. Système (22) pour une synthèse d'images texturées comprenant un synthétiseur de texture (28) muni :
- d'un réseau de neurones de synthèse (40) comprenant des neurones connectés entre eux par des forces de liaisons définies par des coefficients synaptiques (C_{ab}),
- de moyens d'entrée (41) pour charger, dans le réseau de neurones de synthèse (40), des valeurs de coefficients synaptiques (C_{ab}) caractérisant au moins une fonction de voisinage de pixels d'une texture (1a) (2a) d'une image d'entrée (10a),
- de moyens (42) (45) pour faire opérer le réseau de neurones de synthèse (40) de manière autonome, pour générer une réplique statistique (1b) (2b) de ladite texture (1a) (2a) par un mécanisme de relaxation faisant que des données de sortie du réseau de neurones de synthèse (40) soient cycliquement réintroduites en entrée dudit réseau de neurones (40), caractérisé en ce qu' il comprend un analyseur de texture (24) muni:
- d'un réseau de neurones d'analyse (30) qui, à partir d'exemples présentés en entrée se rapportant à ladite texture (1a) (1b), apprend à caractériser ladite texture (1a) (2a) en calculant des valeurs desdits coefficients synaptiques (C_{ab}) en mettant en oeuvre au moins une fonction de voisinage caractérisant un voisinage autour des pixels formant ladite texture (1a) (2a),
- de moyens (27) pour transmettre lesdits coefficients synaptiques (C_{ab}) au réseau de neurones de synthèse (40), le réseau de neurones de synthèse (40) mettant en oeuvre une fonction de voisinage identique à celle apprise ou des fonctions de voisinage identiques à celles apprises par le réseau de neurones d'analyse (30), le réseau de neurones de synthèse (40) générant ladite réplique statistique (1b) (2b) de la texture (1a) (2a) de l'image d'entrée (10a) à partir de valeurs aléatoires données initialement aux pixels de ladite réplique (1b) (2b).

2. Système selon la revendication 1 caractérisé en ce que les réseaux de neurones de synthèse (40) et d'analyse (30) possèdent une structure hiérarchisée en arbre de neurones.

3. Système selon une des revendications 1 ou 2 caractérisé en ce que des pixels initialisateurs de la réplique statistique (1b) (2b) sont transmis au synthétiseur (28) par l'analyseur (24).

4. Système selon une des revendications 2 ou 3 caractérisé en ce que la structure hiérarchisée en arbre de neurones possède une profondeur d'arbre prédéterminée.

## Patentansprüche

1. System (22) für eine Synthese texturierter Bilder, bestehend aus einem Synthetisierer von Texturen (28), versehen mit :
- einem Synthese-Neuronennetz (40), bestehend aus Neuronen, miteinander über Verbindungskräfte verbunden, über synaptische Koeffizienten (C_{ab}) definiert,
- Eingangsmitteln (41) zum Laden in das Synthese-Neuronennetz (40) von synaptischen Koeffizientenwerten (C_{ab}), durch mindestens eine Pixel-Umgebungsfunktion einer Textur (1a) (2a) eines Eingangsbildes (10a) gekennzeichnet,
- Mitteln (42) (45) zur autonomen Arbeit des Synthese-Neuronennetzes (40) zur Erzeugung einer statistischen Replik (1b) (2b) der besagten Textur (1a) (2a) über einen Relaxationsmechanismus, der bewirkt, daß Ausgangsdaten des Synthese-Neuronennetzes (40) zyklisch wieder zum Eingang des besagten Neuronennetzes (40) rückgeführt werden,
dadurch gekennzeichnet, daß es einen Analysierer von Texturen (24) enthält, versehen mit :
- einem Analyse-Neuronennetz (30), das anhand von am Eingang auftretenden, sich auf die besagte Textur (1a) (1b) beziehenden Beispielen lernt, die besagte Textur (1a) (2a) zu charakterisieren, unter Berechnung der Werte der besagten synaptischen Koeffizienten (C_{ab}), unter Verwendung mindestens einer Umgebungsfunktion, durch eine Umgebung um die die besagte Textur (la) (2a) bildenden Pixel gekennzeichnet,
- Mitteln (27) zur Übertragung der besagten synaptischen Koeffizienten (C_{ab}) zum Synthese-Neuronennetz (40),
das Synthese-Neuronennetz (40) verwendet eine zu der vom Analyse-Neuronennetz (30) gelernten identische Umgebungsfunktion oder zu den gelernten identische Umgebungsfunktionen, das Synthese-Neuronennetz (40) erzeugt die besagte statistische Replik (1b) (2b) der Textur (1a) (2a) des Eingangsbilds (10a) anhand von zufälligen, den Pixeln der besagten Replik (1b) (2b) ursprünglich gegebenen Daten.

2. System nach Anspruch 1, dadurch gekennzeichnet, daß das Synthese- (40) und Analyse-Neuronennetz (30) eine hierarchisierte Neuronenbaumstruktur aufweisen.

3. System nach einem der Ansprüche 1 oder 2, dadurch gekennzeichnet, daß die initialisierenden Pixel der statistischen Replik (1b) (2b) dem Synthetisierer (28) vom Analysierer (24) übertragen werden.

4. System nach einem der Ansprüche 2 oder 3, dadurch gekennzeichnet, daß die hierarchisierte Neuronenbaumstruktur eine vorbestimmte Baumtiefe aufweist.

## Claims

1. A system (22) for synthesis of textured images, including a texture synthesizer (28) provided with:
- a synthesizing neural network (40) with neurons which are interconnected by links whose weights are defined by synaptic coefficients (C_{ab}),
- input means (41) for loading the synthesizing neural network (40) with values of the synaptic coefficients (C_{ab}) which characterize at least one pixel proximity function of a texture (1a) (2a) of an input image (10a),
- means (42), (45) for making the synthesizing neural network (40) operate in an autonomous manner so as to generate a statistic replica (1b) (2b) of said texture (1a) (2a) by way of a relaxation mechanism ensuring that output data of the synthesizing neural network (40) are cyclically re-introduced at the input of said neural network (40),
characterized in that it includes a texture analyser (24) provided with:
- an analyzing neural network (30) which learns, on the basis of examples relating to said texture (1a), (1b), which are applied to its input, to characterize said texture (1a) (2a) by calculating values of said synaptic coefficients (C_{ab}) by utilizing at least one proximity function which characterizes a neighbourhood around the pixels constituting said texture (1a) (2a),
- means (27) for applying said synaptic coefficients (C_{ab}) to the synthesizing neural network (40), the synthesizing neural network (40) utilizing a proximity function which is identical to that learned, or proximity functions identical to those learned, by the analyzing neural network (30), the synthesizing neural network (40) generating said statistic replica (1b) (2b) of the texture (la) (2a) of the input image (10a) on the basis of random values initially assigned to the pixels of said replica (1b) (2b).

2. A system as claimed in Claim 1, characterized in that the synthesizing neural network (40) and the analyzing neural network (30) have a hierarchic structure in the form of a tree of neurons.

3. A system as claimed in one of the Claims 1 or 2, characterized in that initialization pixels of the statistic replica (1b) (2b) are applied to the synthesizer (28) by the analyser (24).

4. A system as claimed in one of the Claims 2 or 3, characterized in that the hierarchical structure in the form of a tree of neurons has a given depth of the tree.
